# EUROPÄISCHE PATENTSCHRIFT

(11) **EP 1 154 225 B1**
(45) Veröffentlichungstag und Bekanntmachung des Hinweises auf die Patenterteilung: **27.10.2004**
(21) Anmeldenummer: 01110194.6
(22) Anmeldetag: 08.05.2001
(51) Int. Cl.: G01B 11/02, B65H 23/02

(54) **Erfassen der Randkante, Markierung einer laufenden Warenbahn mit zweiter diffuser Lichtquelle sowie Lichtzeiger**
Detection of an edge of, or marking on, a moving product web with an additional diffuse light source as well as a light pointer
Détection du bord, ou marquage, d'un ruban d'un produit en mouvement avec une deuxième source de lumière diffuse ainsi qu'un indicateur lumineux

(30) Priorität: 10.05.2000 DE 10022597
(43) Veröffentlichungstag der Anmeldung: 14.11.2001
(73) Patentinhaber: ERHARDT + LEIMER GmbH, D-86157 Augsburg (DE)
(72) Erfinder: Eisen, Jürgen, 86199 Augsburg (DE); Heim, Harald, 86159 Augsburg (DE)
(74) Vertreter: Witzany, Manfred, Dipl.-Phys., Dr.

(56) Entgegenhaltungen:
- CH-A- 557 538
- DE-A- 3 637 874
- DE-A- 4 131 365
- DE-U- 29 515 614

## Beschreibung

Die Erfindung betrifft eine Vorrichtung gemäß dem Oberbegriff des Patentanspruchs 1.

Aus der DE 195 19 607 A1 ist eine Vorrichtung zum Erfassen von Markierungen einer laufenden Warenbahn bekannt, die insbesondere auf Warenbahnen aufgedruckte Linien erfaßt. Derartige Linien dienen zum korrekten Führen der Warenbahn bzw. zum Ausrichten von Bearbeitungsvorrichtungen wie beispielsweise Schneideinrichtungen. Dies ist insbesondere in jenen Fällen wichtig, in denen die Warenbahn unsaubere Kantenverläufe aufweist oder mit einem Druckbild versehen ist, das nicht korrekt zu den Bahnkanten ausgerichtet ist. Diese Vorrichtung weist eine CCD-Kamera auf, die einen bestimmten Ausschnitt der Warenbahn optisch abtastet. Dieser CCD-Kamera ist eine Lichtquelle zugeordnet, deren Licht auf jenen Bereich der Warenbahn gerichtet ist, der von der Kamera abgetastet wird. Die Lichtquelle und die Kamera sind dabei derart zueinander ausgerichtet, daß ausschließlich von der Warenbahn diffus reflektiertes Licht in die Kamera gelangt, wodurch Blendeffekte der Kamera vermieden werden. Diese bekannte Vorrichtung hat jedoch den Nachteil, daß spiegelnd reflektierende Warenbahnen, die mit dunklen Markierungen versehen sind, keinen ausreichenden Kontrast in der Kamera ergeben, so daß derartige Markierungen nicht abtastbar sind.

Der Erfindung liegt daher die Aufgabe zugrunde, eine Vorrichtung der eingangs genannten Art zu schaffen, die universeller einsetzbar ist.

Diese Aufgabe wird erfindungsgemäß mit den Merkmalen des Patentanspruchs 1 gelöst.

Die Vorrichtung gemäß Anspruch 1 weist mindestens einen optischen Sensor auf, der die Warenbahn zumindest quer zu ihrer Laufrichtung abtastet. Grundsätzlich könnte eine CCD-Kamera als Sensor eingesetzt werden, die von einem bestimmten Ausschnitt der Warenbahn ein zweidimensionales Bild erzeugt. Aufgrund der stetigen Bewegung der Warenbahn in Laufrichtung reicht es jedoch völlig aus, eine sogenannte CCD-Zeilenkamera einzusetzen, die lediglich eine Pixelzeile quer zur Bahnlaufrichtung abtastet. Damit kann die jeweilige Position der längs zur Warenbahn verlaufenden Markierung zu jedem Zeitpunkt erfaßt werden. Die CCD-Zeilenkamera hat den Vorteil, daß die von ihr abgegebene Information einfacher und damit schneller auswertbar ist, so daß die einzelnen Meßzyklen entsprechend dichter aufeinander folgen können. Zur Beleuchtung des vom optischen Sensor erfaßten Bereichs der Warenbahn sind dem optischen Sensor mindestens zwei Lichtquellen zugeordnet, von denen eine im wesentlichen gerichtetes und die andere diffuses Licht erzeugt. Diese beiden Lichtquellen sind wechselweise bzw. gleichzeitig einsetzbar, um Markierungen auf unterschiedlichsten Warenbahnen sicher abtasten zu können. Insbesondere bei Warenbahnen mit sehr rauher Oberfläche wird das auftreffende Licht im wesentlichen diffus reflektiert, so daß in diesem Fall die gerichtetes Licht erzeugende Lichtquelle bevorzugt wird. Diese erzeugt aufgrund ihrer Richtwirkung einen eng begrenzten Lichtfleck auf der Warenbahn, der sehr einfach mit dem Erfassungsbereich des optischen Sensors abgestimmt werden kann, so daß das von dieser Lichtquelle ausgestrahlte Licht optimal genutzt wird. Um störende Reflexe der Warenbahn vom optischen Sensor fernzuhalten, ist diese Lichtquelle derart zur Warenbahn und zum optischen Sensor ausgerichtet, daß die Reflexionsbedingung nicht erfüllt ist, der von der Warenbahn spiegelnd reflektierte Lichtstrahl also am optischen Sensor vorbeigeht. Zur Abtastung von spiegelnd reflektierenden Warenbahnen wird dagegen bevorzugt die diffuse Lichtquelle eingesetzt, da diese Licht aus ihrer Austrittsfläche in unterschiedlichste Raumrichtungen abstrahlt. Damit ist die Reflexionsbedingung, gemäß der der Winkel zwischen der Lichtquelle und der Warenbahn gleich dem Winkel zwischen dem optischen Sensor und der Warenbahn sein muß, stets für irgendeinen der diffus abgestrahlten Lichtstrahlen erfüllt, so daß die spiegelnd reflektierende Fläche der Warenbahn im optischen Sensor hell erscheint. Auf der spiegelnd reflektierenden Fläche aufgebrachte Markierungen, die dunkel sind oder diffus reflektieren, erscheinen dagegen dunkel, so daß ein ausreichender Kontrast zur Erfassung dieser Markierungen gegeben ist. Durch die Verwendung von diffusem Licht ergibt sich außerdem der Vorteil, daß die Lichtquelle und der optische Sensor in einem breiten Winkelbereich zur Warenbahn ausgerichtet sein können, so daß insbesondere ein korrektes Einjustieren der Vorrichtung zur Warenbahn entfallen kann. Bei sehr schwierig zu erfassenden Warenbahnen, wie beispielsweise Textilien mit eingewebten Metallfäden, kann es vorkommen, daß eine aufgebrachte Markierung weder bei gerichtetem noch bei diffusem Licht einen ausreichenden Kontrast liefert. In diesem Fall kann die aufgebrachte Markierung durch gleichzeitiges Bestrahlen der Warenbahn mit gerichtetem und diffusem Licht noch mit ausreichendem Kontrast erfaßt werden, wobei die Winkellage zwischen der Vorrichtung und der Warenbahn trotzdem unkritisch ist.

Zur einfachen Erzeugung von diffusem Licht ist es gemäß Anspruch 2 vorteilhaft, wenn die entsprechende Lichtquelle eine Streuscheibe aufweist. Diese Streuscheibe wird ausgeleuchtet, wobei das Licht von jedem Punkt der Streuscheibe in alle Raumrichtungen gestreut wird, so daß das gestreute Licht optimal diffus und zur Abtastung spiegelnd reflektierender Warenbahnen günstig einsetzbar ist.

Insbesondere in der Textil- und Papierindustrie müssen die Lichtquellen und der optische Sensor zuverlässig vor aufgewirbeltem Staub und ähnlichem geschützt werden. Dies wird gemäß Anspruch 3 am einfachsten durch eine transparente Abdeckung realisiert, die sowohl den Sensor als auch die Lichtquellen gemeinsam abdeckt. Zur Bildung der Streuscheibe ist jener Teilbereich der Abdeckung, von dem diffuses Licht abgestrahlt werden soll, mit einer rauhen Oberfläche ausgebildet. Vorzugsweise besteht die Abdekkung aus Glas oder transparentem Kunststoff, wobei die rauhe Oberfläche durch Ätzen erzeugt ist.

Um eine gleichmäßige Ausleuchtung der Streuscheibe zu erzielen, ist es gemäß Anspruch 4 vorteilhaft, wenn die diffuses Licht abstrahlende Lichtquelle mehrere Emitter aufweist. Die Anzahl der einzusetzenden Emitter hängt dabei von der Größe der Streuscheibe ab. Vorzugsweise erzeugen die einzelnen Emitter einander überlappende Lichtkegel, wodurch sich die Homogenität des diffusen Lichtes weiter verbessert. Weisen die Lichtkegel der Emitter Öffnungswinkel von mindestens 45° auf, so ergibt sich eine ausreichend homogene Ausleuchtung der Streuscheibe und damit eine gute Qualität des erzeugten diffusen Lichtes, wobei trotzdem die Lichtquelle kompakt aufgebaut werden kann.

Um das Licht der ersten Lichtquelle, die gerichtetes Licht erzeugt, korrekt auf den vom optischen Sensor abgetasteten Bereich der Warenbahn abstimmen zu können, ist es gemäß Anspruch 5 vorteilhaft, wenn diese Lichtquelle Lichtkegel mit einem Öffnungwinkel von höchstens 60° erzeugt. Vorzugsweise ist der Öffnungswinkel höchstens 45°, wodurch sich eine flutlichtartige Wirkung dieser Lichtquelle ergibt.

Werden als Lichtquellen gemäß Anspruch 6 Leuchtdioden eingesetzt, so ergibt sich eine besonders hohe Lebensdauer der Lichtquellen bei gleichzeitig niedrigem Leistungsverbrauch. Außerdem besitzen Leuchtdioden eine sehr kleine Licht emittierende Fläche, so daß mit ihnen einfach gerichtetes Licht erzeugt werden kann. Außerdem lassen sich Leuchtdioden sehr schnell ein- bzw. ausschalten, so daß der Wechsel zwischen den unterschiedlichen Lichtquellen sehr rasch erfolgen kann.

Um Warenbahnen unterschiedlichster Farben und mit unterschiedlichsten Markierungen sicher erfassen zu können, ist es gemäß Anspruch 7 günstig, wenn die Lichtquellen mehrfarbiges Licht emittieren. Damit können selbst Markierungen erfaßt werden, die sich von der Warenbahn nicht durch ihre Helligkeit, sondern ausschließlich durch ihre Farbgebung unterscheiden. Im Falle des Einsatzes von Leuchtdioden als Lichtquellen können Mehr-Farben-Leuchtdioden eingesetzt werden, die Licht mit unterschiedlichen Wellenlängen erzeugen. Es ist auch denkbar, Leuchtdioden mit unterschiedlicher Farbe nebeneinander einzusetzen, die zu einer gemeinsamen Lichtquelle vereint sind. Am günstigsten ist es jedoch, sogenannte weiße Leuchtdioden einzusetzen. Diese bestehen aus einer blaues Licht emittierenden Leuchtdiode, in deren Gehäuse fluoreszierende Stoffe eingebracht sind. Diese fluoreszierenden Stoffe wandeln einen Teil des blauen Lichtes in Licht größerer Wellenlänge um, wobei in der Überlagerung des gesamten abgestrahlten Lichtes weißes Licht entsteht. Die Verwendung von weißem Licht hat den besonderen Vorteil, daß jede mit dem Auge erkennbare Markierung auch vom optischen Sensor erfaßbar ist.

Insbesondere zum Erfassen von Markierungen auf sehr schwierigen Warenbahnen, wie metalldurchsetzten Wirkwaren, ist es gemäß Anspruch 8 vorteilhaft, wenn die Lichtquellen in ihrer Helligkeit modulierbar und miteinander mischbar sind. Damit kann der relative Anteil des diffusen Lichtes am Gesamtlicht kontinuierlich eingestellt werden, so daß auch unter diesen schwierigen Umständen ein hoher Kontrast zwischen der Markierung und der Warenbahn erzeugt werden kann.

Um das optimale Mischungsverhältnis zwischen der diffusen und der gerichteten Lichtquelle zu finden, ist es gemäß Anspruch 9 vorteilhaft, wenn die Lichtquellen mit einer Regeleinrichtung in Wirkverbindung stehen. Diese Regeleinrichtung optimiert dabei den Kontrast zwischen der Warenbahn und der Markierung, so daß zu diesem Zweck keine Person erforderlich ist. Vorzugsweise wird die Regeleinrichtung von einem durch ein Programm gesteuerten Mikrocomputer oder Mikrocontroller realisiert. In einfachen Fällen kann es ausreichend sein, zwischen beiden Lichtquellen umzuschalten und anhand der vom optischen Sensor gelieferten Signale zu bestimmen, in welchem Fall der Kontrast der Markierung größer ist. Die Lichtquelle, die den besseren Kontrast liefert, wird dann im laufenden Betrieb gewählt. Müssen jedoch beide Lichtquellen miteinander gemischt werden, so ist es günstig, das Mischungsverhältnis der beiden Lichtstärken durch eine vom Kontrast beeinflußte sukzessive Approximation zu bestimmen.

Insbesondere bei bedruckten Warenbahnen kann es schwierig sein, die zur Bahnlaufregelung oder Einstellung der Bearbeitungsvorrichtungen heranzuziehende Markierung von der übrigen Bedruckung zu trennen. In diesem Fall liefert die Vorrichtung mehrere mögliche Positionen der Markierung, von denen die richtige per Hand auszuwählen ist. Zur Erleichterung dieser Auswahl ist es gemäß Anspruch 10 günstig, wenn die Vorrichtung einen Lichtzeiger aufweist, der auf jene Position der Warenbahn projeziert wird, die der gefundenen Markierung entspricht. Die bedienende Person kann in diesem Fall sehr einfach überprüfen, ob die gefundene Position der relevanten Markierung entspricht oder nicht und die Vorrichtung beispielsweise durch Tastendrucke anweisen, eine andere gefundene Position anzusteuern. Damit kann auch unter diesen erschwerten Bedingungen eine sichere Verfolgung der Markierung gewährleistet werden.

Der Erfindungsgegenstand wird beispielhaft anhand der Zeichnung erläutert, ohne den Schutzumfang zu beschränken.

Es zeigt:
- Figur 1: eine Ansicht einer bevorzugten Ausführungsform einer Vorrichtung zum Erfassen einer Randkante bzw. einer Markierung einer laufenden Warenbahn von unten,
- Figur 2: eine zugeordnete Schnittdarstellung der Vorrichtung gemäß Figur 1 entlang der Schnittlinie II-II,
- Figur 3: eine weitere Schnittdarstellung der Vorrichtung gemäß Figur 1 durch die Schnittlinie III-III und
- Figur 4: eine zugeordnete Schnittdarstellung durch die Vorrichtung gemäß Figur 1 entlang der Schnittlinie IV-IV.

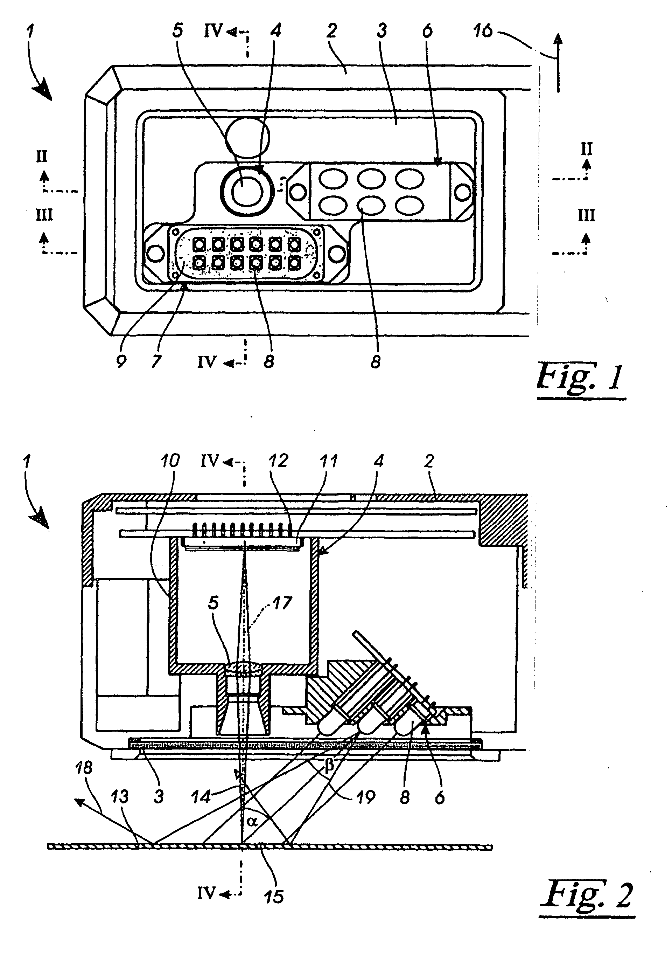

Eine Vorrichtung 1 zum Erfassen einer Randkante oder einer Markierung einer in Richtung 16 laufenden Warenbahn gemäß Figur 1 wird von einem Gehäuse 2 gebildet, das unterseitig durch eine transparente Abdeckung 3 abgeschlossen ist. In dem Gehäuse 2 ist ein optischer Sensor 4 vorgesehen, von dem nur ein Objektiv 5 zu erkennen ist. Dieser optische Sensor 4 erfaßt ein eindimensionales Bild der Warenbahn, aus dem die Position ihrer Randkante oder einer auf der Warenbahn vorgesehenen Markierung bestimmt wird.

Damit der optische Sensor 4 ein optisches Signal empfangen kann, muß der vom optischen Sensor 4 abgetastete Bereich der Warenbahn beleuchtet werden. Hierzu sind im Gehäuse 2 zwei Lichtquellen 6, 7 vorgesehen, die unterschiedlich aufgebaut sind.

Die erste Lichtquelle 6 wird von sechs Leuchtdioden 8 gebildet, die im wesentlichen gerichtetes Licht erzeugen und den abgetasteten Bereich der Warenbahn ausleuchten. Dem gegenüber wird die zweite Lichtquelle 7 von zwölf Leuchtdioden 8 gebildet, die im wesentlichen senkrecht gegen die transparente Abdeckung 3 gerichtet sind. Im Bereich der zweiten Lichtquelle 7 ist diese transparente Abdeckung 3 mit einer geätzten, rauhen Oberfläche versehen, so daß die transparente Abdeckung 3 in diesem Bereich eine grau dargestellte Streuscheibe 9 bildet.

Das von den Leuchtdioden 8 der zweiten Lichtquelle 7 emittierte Licht wird von der Streuscheibe 9 in alle Raumrichtungen gestreut, so daß die zweite Lichtquelle 7 homogenes, diffuses Licht emittiert. Durch wahlweises oder gleichzeitiges Anschalten der ersten 6 oder zweiten Lichtquelle 7 kann daher die Vorrichtung 1 an unterschiedliche Warenbahnarten angepaßt werden, so daß in jedem Fall ein ausreichend hoher Kontrast zwischen der Warenbahn und der Markierung gegeben ist.

Figur 2 zeigt eine zugeordnete Schnittdarstellung durch die Vorrichtung gemäß Figur 1 entlang der Schnittlinie II-II. Aus dieser Darstellung ist insbesondere der Aufbau des optischen Sensors 4 zu erkennen. Der optische Sensor 4 besteht aus einem zylindrischen Gehäuse 10, in dem ein CCD-Sensor 11 vorgesehen ist. Der CCD-Sensor 11 enthält eine Anzahl Fotodioden, die in einer Reihe angeordnet sind. Diese Fotodioden sind über ein analoges Schieberegister seriell auslesbar, wobei an einem seriellen Ausgang 12 nacheinander Signale abgegeben werden, die zu den von den Fotodioden empfangenen Lichtmengen proportional sind. Der Ausgang 12 des CCD-Sensors 11 gibt daher ein eindimensionales Bild der Helligkeitsverteilung des Erfassungsbereichs der Warenbahn 13 ab.

Im zylindrischen Gehäuse 10 ist außerdem das Objektiv 5 gehalten, das die von der Warenbahn 13 ausgesendeten Lichtstrahlen 14 auf den CCD-Sensor 11 abbildet. Eine auf der Warenbahn 13 vorgesehene Markierung 15 in Form eines hellen oder dunklen Streifens, der vorzugsweise aufgedruckt ist, wird dabei vom CCD-Sensor 11 erfaßt und als Modulation des Ausgangssignals abgegeben. Die Markierung 15 verläuft dabei in Bahnlaufrichtung 16, die in Figur 2 senkrecht zur Bildebene verläuft.

Aus der Figur 2 ist außerdem zu entnehmen, daß die Leuchtdioden 8 der ersten Lichtquelle 6 mit der optischen Achse 17 des Sensors 4 einen spitzen Winkel α einschließen. Dieser Anstellwinkel der Leuchtdioden 8 beträgt etwa 45° und sorgt dafür, daß die von der Warenbahn 13 spiegelnd reflektierten Lichtstrahlen 18 am Objektiv 5 vorbeigehen.

Die Leuchtdioden 8 der ersten Lichtquelle 6 emittieren Lichtkegel 19, deren Öffnungswinkel β etwa 30° beträgt. Unter dem Öffnungswinkel β ist dabei jener Winkel zu verstehen, den die Lichtstrahlen einschließen, deren Intensität auf die Hälfte des Maximums abgefallen ist. Durch die relativ schmalen Lichtkegel 19 wird das von den Leuchtdioden 8 der ersten Lichtquelle 6 emittierte Licht auf einen engen Bereich der Warenbahn 13 beschränkt, der sich aufgrund der besonderen Ausrichtung der Leuchtdioden 8 symmetrisch um die optische Achse 17 des Sensors 4 erstreckt. Die sechs Leuchtdioden 8 der ersten Lichtquelle 6 ergeben dabei auf der Warenbahn 13 einen schmalen Lichtstreifen, der sich quer zur Warenbahnlaufrichtung 16 erstreckt und im wesentlichen dem Erfassungsbereich des optischen Sensors 4 entspricht.

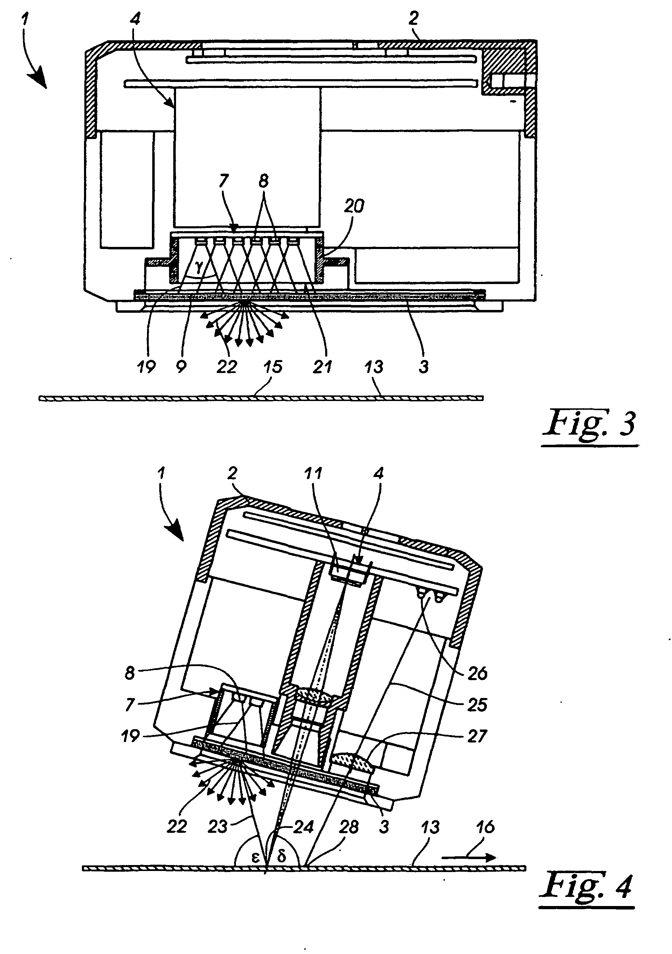

Aus der Schnittdarstellung gemäß Figur 3 ist insbesondere der Aufbau der zweiten Lichtquelle 7 zu ersehen. Die zweite Lichtquelle 7 weist eine Anzahl Leuchtdioden 8 auf, die in einem gesonderten Gehäuse 20 innerhalb des Gehäuses 2 untergebracht sind. Die von den Leuchtdioden 8 der zweiten Lichtquelle 7 abgestrahlten Lichtkegel 19 weisen einen Öffnungswinkel γ von mindestens 45° auf, so daß sich diese Lichtkegel 19 innerhalb des Gehäuses 20 gegenseitig überlappen. Im Bereich des unteren Endes 21 des Gehäuses 20 ist die Gesamtintensität des abgestrahlten Lichtes näherungsweise über die gesamte Querschnittsfläche des Gehäuses 20 konstant, so daß das Gehäuse 20 homogen ausgeleuchtet ist. In geringem Abstand unterhalb des unteren Endes 21 des Gehäuses 20 ist die transparente Abdeckung 3 vorgesehen, die im dem Gehäuse 20 gegenüberliegenden Bereich als Streuscheibe 9 ausgebildet ist. Das auf die Streuscheibe 9 auftreffende Licht wird in alle Raumrichtungen gestreut, so daß das von der Streuscheibe 9 abgegebene Licht 22 diffus ist. Damit ist sichergestellt, daß jeder Punkt des vom optischen Sensor 4 abgetasteten Bereichs der Warenbahn 13 aus unterschiedlichen Richtungen beleuchtet wird, so daß es stets einen Lichtstrahl gibt, der die Reflexionsbedingung erfüllt. Damit erscheint eine spiegelnd reflektierende Warenbahn 13 bei angeschalteter diffuser Lichtquelle 7 im optischen Sensor 4 hell, so daß eine darauf aufgebrachte Markierung 15 vom optischen Sensor 4 erfaßbar ist.

In Figur 4 ist eine zugeordnete Schnittdarstellung durch die Vorrichtung 1 entlang der Schnittlinie IV-IV gezeigt, aus der insbesondere die Zuordnung der zweiten Lichtquelle 7 zum optischen Sensor 4 zu entnehmen ist. Die zweite Lichtquelle 7 ist in unmittelbarer Nähe des optischen Sensors 4 angeordnet. Um unter diesen Umständen die Reflexionsbedingung für die Warenbahn 13 erfüllen zu können, wird die optische Achse 17 des Sensors 4 in einem spitzen Winkel δ zur Warenbahn 13 eingestellt. Dieser Einstellwinkel δ beträgt im vorliegenden Fall ca. 75° und ist derart zu wählen, daß die Reflexionsbedingung erfüllt ist. Dies ist dann gegeben, wenn ein Lichtstrahl von der zweiten Lichtquelle 7 den Erfassungsbereich 24 des optischen Sensors 4 auf der Warenbahn 13 in einem Winkel ε trifft, der gleich dem Anstellwinkel δ zwischen der Warenbahn 13 und der optischen Achse 17 ist. Da die zweite Lichtquelle 7 eine gewisse Breitenausdehnung besitzt und das Streulicht 22 in alle Raumrichtungen abgestrahlt wird, ist diese Reflexionsbedingung für einen bestimmten Winkelbereich erfüllt. Damit müssen an die korrekte Ausrichtung der optischen Achse 17 zur Warenbahn 13 keine hohen Anforderungen gestellt werden.

Dem optischen Sensor 4 ist schließlich ein Lichtzeiger 25 nebengeordnet, der von einer Anzahl hintereinander angeordneter, roter Leuchtdioden 26 gebildet ist. Das von den Leuchtdioden 26 abgegebene Licht wird durch eine Linse 27 auf die Warenbahn 13 abgebildet, auf der damit eine Linie 28 sichtbar ist. Durch eine nicht dargestellte Auswerteschaltung wird das vom optischen Sensor 4 abgegebene Signal auf das Vorhandensein von Markierungen überprüft und die gefundene Position durch Anschalten der entsprechenden Leuchtdioden 26 auf der Warenbahn 13 angezeigt.

Damit kann eine bedienende Person erkennen, ob die Vorrichtung 1 die Markierung 15 korrekt erkannt hat oder fälschlicherweise ein Merkmal eines auf der Warenbahn aufgedruckten Bildes als Markierung ansieht. In diesem Fall kann die bedienende Person die Vorrichtung 1 über nicht dargestellte Tasten anweisen, eine links oder rechts neben der aktuellen Zeigerposition 28 befindliche Markierung 15 zu verwenden. Dieser Vorgang wird so lange wiederholt, bis der Lichtzeiger 25 auf die korrekte Markierung 15 zeigt, deren Positionsänderungen im folgenden als Signal abgegeben werden.

## Patentansprüche

1. Vorrichtung zum Erfassen der Randkante und/oder einer im wesentlichen in Bahnlängsrichtung verlaufenden Markierung (15) einer laufenden Warenbahn (13), wobei die Vorrichtung (1) mindestens einen gegen die Warenbahn (13) gerichteten und diese zumindest quer zu ihrer Laufrichtung (16) abtastenden optischen Sensor (4) aufweist, dem mindestens eine erste Lichtquelle (6) zugeordnet ist, deren Lichtstrahlen (19) derart gegen den vom Sensor (4) erfaßten Abschnitt (24) der Warenbahn (13) gerichtet sind, daß vom Sensor (4) ausschließlich von der Warenbahn (13) diffus reflektiertes Licht (14) erfaßbar ist, **dadurch gekennzeichnet, daß** dem optischen Sensor (4) mindestens eine zweite, diffuses Licht (22) abstrahlende Lichtquelle (7) zugeordnet ist, wobei beide Lichtquellen (6, 7) wechselweise oder gleichzeitig einsetzbar sind.

2. Vorrichtung nach Anspruch 1, **dadurch gekennzeichnet, daß** die diffuses Licht (22) abstrahlende zweite Lichtquelle (7) mindestens eine Streuscheibe (9) aufweist.

3. Vorrichtung nach Anspruch 2, **dadurch gekennzeichnet, daß** der optische Sensor (4) und die Lichtquellen (6, 7) durch eine gemeinsame, transparente Abdeckung (3) abgeschlossen sind, die zur Bildung der Streuscheibe (9) im Teilbereich eine rauhe, Licht streuende Oberfläche aufweist.

4. Vorrichtung nach einem der Ansprüche 1 bis 3, **dadurch gekennzeichnet, daß** die diffuses Licht (2) abstrahlende zweite Lichtquelle (7) mehrere Emitter (8) aufweist, die vorzugsweise einander überlappende Lichtkegel (19) erzeugen, deren Öffnungswinkel (γ) vorzugsweise mindestens 45° betragen.

5. Vorrichtung nach einem der Ansprüche 1 bis 4, **dadurch gekennzeichnet, daß** die erste Lichtquelle (6) einen Lichtkegel (19) mit einem Öffnungswinkel (β) erzeugt, der höchstens 60° ist.

6. Vorrichtung nach einem der Ansprüche 1 bis 5, **dadurch gekennzeichnet, daß** mindestens eine der Lichtquellen (6, 7) mindestens eine Leuchtdiode (8) aufweist.

7. Vorrichtung nach einem der Ansprüche 1 bis 6, **dadurch gekennzeichnet, daß** die Lichtquellen (6, 7) mehrfarbiges Licht emittieren.

8. Vorrichtung nach einem der Ansprüche 1 bis 7, **dadurch gekennzeichnet, daß** die Lichtquellen (6, 7) in ihrer Helligkeit modulierbar und/oder miteinander mischbar sind.

9. Vorrichtung nach einem der Ansprüche 1 bis 8, **dadurch gekennzeichnet, daß** die Lichtquellen (6, 7) mit einer den Kontrast zwischen der Markierung (15) und der Warenbahn (13) optimierenden Regeleinrichtung in Wirkverbindung stehen.

10. Vorrichtung nach einem der Ansprüche 1 bis 9, **dadurch gekennzeichnet, daß** die Vorrichtung (1) einen die Position der gefundenen Markierung (15) auf die Warenbahn (13) projizierenden Lichtzeiger (25) aufweist.

## Claims

1. Apparatus for detecting the marginal edge and/or a marking (15) running substantially in the web running direction of a moving product web (13), the apparatus (1) having at least one optical sensor (4) which is aimed towards the product web (13) and scans the latter at least transversely with respect to its running direction (16) and to which at least a first light source (6) is assigned, whose light beams (19) are aimed at the section (24) of the product web (13) detected by the sensor (4) in such a way that only light (14) reflected diffusely from the product web (13) can be detected by the sensor (4), **characterized in that** at least a second light source (7) emitting diffuse light (22) is assigned to the optical sensor (4), it being possible for the two light sources (6, 7) to be used alternately or simultaneously.

2. Apparatus according to Claim 1, **characterized in that** the second light source (7) emitting diffuse light (22) has at least one diffuser plate (9).

3. Apparatus according to Claim 2, **characterized in that** the optical sensor (4) and the light sources (6, 7) are sealed off by a common, transparent covering (3) which, in order to form the diffuser plate (9), has a rough, light-scattering surface in the subregion.

4. Apparatus according to one of Claims 1 to 3, **characterized in that** the second light source (7) emitting diffuse light (2) has a plurality of emitters (8) which preferably generate mutually overlapping cones (19) of light whose opening angles (□) are preferably at least 45°.

5. Apparatus according to one of Claims 1 to 4, **characterized in that** the first light source (6) generates a cone (19) of light with an opening angle (□) which is at most 60°.

6. Apparatus according to one of Claims 1 to 5, **characterized in that** at least one of the light sources (6, 7) has at least one light-emitting diode (8).

7. Apparatus according to at least one of Claims 1 to 6, **characterized in that** the light sources (6, 7) emit multicoloured light.

8. Apparatus according to one of Claims 1 to 7, **characterized in that** the light sources (6, 7) can have their brightness modulated and/or can be mixed with one another.

9. Apparatus according to one of Claims 1 to 8, **characterized in that** the light sources (6, 7) are operationally connected to a control device that optimizes the contrast between the marking (15) and the product web (13).

10. Apparatus according to one of Claims 1 to 9, **characterized in that** the apparatus (1) has a light pointer (25) that projects the position of the marking (15) found onto the product web (13).

## Revendications

1. Dispositif de détection du bord et/ou d'un marquage (15), s'étendant essentiellement dans la direction longitudinale de la bande, d'un produit en bande (13) en mouvement, le dispositif (1) présentant au moins un capteur optique (4) orienté en direction de la bande (13), qu'il balaye au moins transversalement à sa direction de défilement (16) et auquel est associée au moins une première source lumineuse (6), dont les rayons lumineux (19) sont dirigés en direction de la section (24), détectée par le capteur (4), du produit en bande (13) de telle sorte que de la lumière (14) réfléchie de façon diffuse par la bande (13) est exclusivement détectable par le capteur (4), **caractérisé en ce qu'**au moins une seconde source lumineuse (7), émettant de la lumière diffuse (22), est associée au capteur optique (4), les deux sources lumineuses (6, 7) étant utilisables alternativement ou simultanément.

2. Dispositif suivant la revendication 1, **caractérisé en ce que** la seconde source lumineuse (7) émettant de la lumière diffuse (22) présente au moins un écran diffusant (9).

3. Dispositif suivant la revendication 2, **caractérisé en ce que** le capteur optique (4) et les sources lumineuses (6, 7) sont fermés par une couverture transparente (3) commune, qui présente dans une zone partielle une surface rugueuse, dispersant de la lumière, pour former l'écran diffusant (9).

4. Dispositif suivant l'une des revendications 1 à 3, **caractérisé en ce que** la seconde source lumineuse (7) émettant de la lumière diffuse (22) présente plusieurs émetteurs (8), qui génèrent de préférence des cônes lumineux' (19) en chevauchement mutuel, dont l'angle d'ouverture (γ) est de préférence d'au moins 45°.

5. Dispositif suivant l'une des revendications 1 à 4, **caractérisé en ce que** la première source lumineuse (6) génère un cône lumineux (19) avec un angle d'ouverture (β) de 60° au maximum.

6. Dispositif suivant l'une des revendications 1 à 5, **caractérisé en ce qu'**au moins l'une des sources lumineuses (6, 7) présente au moins une diode électroluminescente (8).

7. Dispositif suivant l'une des revendications 1 à 6, **caractérisé en ce que** les sources lumineuses (6, 7) émettent de la lumière polychrome.

8. Dispositif suivant l'une des revendications 1 à 7, **caractérisé en ce que** les sources lumineuses (6, 7) peuvent être modulées dans leur luminosité et/ou mélangées entre elles.

9. Dispositif suivant l'une des revendications 1 à 8, **caractérisé en ce que** les sources lumineuses (6, 7) sont en liaison active avec un dispositif de réglage optimisant le contraste entre le marquage (15) et le produit en bande (13).

10. Dispositif suivant l'une des revendications 1 à 9, **caractérisé en ce que** le dispositif (1) présente un indicateur lumineux (25) projetant la position du marquage trouvé (15) sur le produit en bande (13).
